# EUROPEAN PATENT SPECIFICATION

(11) **EP 3 591 927 B1**
(45) Date of publication and mention of the grant of the patent: **24.11.2021**
(21) Application number: 18181391.6
(22) Date of filing: 03.07.2018
(51) Int. Cl.: H04L 29/06, H04W 12/04, H04L 9/32, H04L 9/06

(54) **APPARATUS AND METHOD FOR DETECTING DUPLICATION OF SECURE KEYS OF CONSUMER ELECTRONICS DEVICES**
VORRICHTUNG UND VERFAHREN ZUR ERKENNUNG VON DOPPELTEN SCHLÜSSELN VON VERBRAUCHERELEKTRONIKVORRICHTUNGEN
APPAREIL ET PROCÉDÉ PERMETTANT DE DÉTECTER LA DUPLICATION DE CLÉS SÉCURISÉES DE DISPOSITIFS ÉLECTRONIQUES GRAND PUBLIC

(43) Date of publication of application: 08.01.2020
(73) Proprietor: Vestel Elektronik Sanayi ve Ticaret A.S., 45030 Manisa (TR)
(72) Inventor: ÖZTEKIN, Güner, 45030 Manisa (TR); YILMAZ, Evren Gökhan, 45030 Manisa (TR)
(74) Representative: Flint, Adam

(56) References cited:
- US-A1- 2010 017 602
- US-B2- 8 347 078
- US-B2- 9 553 732
- Andrew Conn: "How to detect duplicate values of sensitive data that needs to be encrypted - Cryptography Stack Exchange", , 13 April 2017 (2017-04-13), XP055514192, Retrieved from the Internet: URL:https://crypto.stackexchange.com/quest ions/42772/how-to-detect-duplicate-values- of-sensitive-data-that-needs-to-be-encrypt ed [retrieved on 2018-10-10]

## Description

### Technical Field

The present disclosure relates to an apparatus and method for detecting duplication of secure keys of consumer electronics devices.

### Background

Many consumer electronics devices, including for example television sets, are loaded with a secure key, certificate, etc. during production of the devices. These secure keys are intended to be unique to a single device. However, sometimes these secure keys are unintentionally duplicated during the production process. This can cause legal and functional issues.

US9553732B2 discloses techniques for advising clients of the trustworthiness of respective certificate authorities by evaluating the certificates issued by such certificate authorities for suspicious indicators, such as hash code collisions with other certificates and public key re-use.

US8347078B2 discloses a method of generating a device certificate comprising, constructing a device certificate challenge at a device, sending information to a device certificate individualization server in response to the device certificate challenge, validating the device certificate challenge by the device certificate individualization server, and validating the device certificate response by the device.

### Summary

According to a first aspect disclosed herein, there is provided a method of detecting duplication of secure keys of consumer electronics devices during production and/or testing of the consumer electronics devices, the method comprising: each consumer electronics device processing its secure key to generate a hash value of its secure key; each consumer electronics device transmitting a data pair comprising its hash value and a linked device identifier of the consumer electronics device to the other consumer electronics devices; each consumer electronics device receiving data pairs from the other consumer electronics devices, wherein each data pair comprises a hash value of a secure key of a respective consumer electronics device and a linked device identifier of that consumer electronics device; each consumer electronics device determining whether or not a secure key of the consumer electronics device is a duplicate of a secure key of another consumer electronics device by comparing the hash value of its secure key with the hash value of the secure key of the other consumer electronics device; and if any consumer electronics device receives a hash value linked with a device identifier other than its own device identifier and that is the same as its own generated hash value, that consumer electronics device outputting an alert.

In an example, the method comprises at least one consumer electronics device generating a respective visual representation for one or more received hash values, wherein said generating comprises generating identical visual representations for identical hash values; and at least one consumer electronics device displaying one or more of the generated visual representations on a display screen of the at least one consumer electronics device.

In an example, the comparing comprises comparing the visual representation of the hash value of the secure key of the first consumer electronics device with the visual representation of the hash value of the secure key of the second consumer electronics device.

According to a second aspect disclosed herein, there is provided apparatus for detecting duplication of secure keys of consumer electronics devices during production and/or testing of the consumer electronics devices, wherein the apparatus is a first one of the consumer electronics devices, the apparatus comprising: a hash function configured to generate a hash value of the secure key of the first consumer electronics device, wherein the apparatus is configured to transmit its hash value and a linked device identifier of the first consumer electronics device to the other consumer electronics devices; a detection function for receiving data pairs, wherein each data pair is received from a respective one of the other consumer electronics devices, and wherein each data pair comprises a hash value of a secure key of a respective consumer electronics device and a linked device identifier of that consumer electronics device; the detection function being arranged to determine whether or not a secure key of the first consumer electronics device is a duplicate of a secure key of another of the consumer electronics devices by comparing the hash value of its secure key with the hash value of the secure key of the other consumer electronics devices; and an alert function configured to output an alert in response to determining that the secure key of the first consumer electronics device is a duplicate of the secure key of another of the consumer electronics devices.

In an example, the apparatus comprises a controller configured to generate a respective visual representation for one or more received hash values, wherein the controller is configured to generate identical visual representations for identical hash values; and wherein the apparatus comprises a display screen configured to display one or more of the generated visual representations.

In an example, the apparatus is configured to transmit, to at least one consumer electronics device, a notification indicating that the secure key of the first consumer electronics device is a duplicate.

According to a third aspect disclosed herein, there is provided a computer program comprising instructions such that when the computer program is executed on a computing device, the computing device is arranged to carry out a method according to any of the method steps disclosed herein.

### Brief Description of the Drawings

To assist understanding of the present disclosure and to show how embodiments may be put into effect, reference is made by way of example to the accompanying drawings in which:
Figure 1a shows schematically an example method of sharing hash values of secure keys of consumer electronics devices between consumer electronics devices;
Figure 1b shows schematically an example method of sharing hash values of secure keys of consumer electronics devices with a remote server;
Figure 2 shows schematically an example apparatus for detecting duplication of secure keys of consumer electronics devices; and
Figures 3a to 3c show schematically example visual representations of hash values of secure keys of consumer electronics devices.

### Detailed Description

Consumer electronics devices, such as television sets, mobile devices, etc. are typically loaded with a secure key, certificate, credential, etc. during production / manufacture of the devices. Note that the term "secure key" as used herein is used as a generic term for a piece of encrypted information, unless the context requires otherwise. For legal and functional reasons, each consumer electronics device should normally be loaded with a secure key that is unique to that device. It is therefore necessary to ensure that no consumer electronics device is loaded with a duplicated secure key. However, it is not possible to detect duplicated keys by directly comparing the secure keys of each consumer electronics device because the keys are encrypted and sharing the unencrypted secure keys would compromise their security.

There is therefore a need for a way of detecting duplication of secure keys of consumer electronics devices without compromising the integrity of the secure keys.

In examples described herein, a detection function receives two or more data pairs, each data pair being received from a respective consumer electronics device. Each data pair contains a device identifier of the consumer electronics device from which the data pair has been received from. Each data pair also contains a hash value of a secure key of a respective consumer electronics device. The hash value and device identifier of each data pair are linked together.

Here, in general a hash function is a function that can be used to map data of arbitrary size to a fixed size (numerical) value. The values returned by a hash function are called hash values. Hash values are also sometimes referred to in the art as hash codes, digests, or simply hashes. A hash function is typically a mathematical function. The hash value enables the original data or information to be verified by a third party without having to reveal the original data or information to that third party.

The detection function then determines whether or not a secure key of a first consumer electronics device is a duplicate of a secure key of a second consumer electronics device by comparing the hash value of the secure key of the first consumer electronics device with the hash value of the secure key of the second consumer electronics device. If the first and second hash values match (i.e. they are identical), the secure key of the first consumer electronics device is a duplicate.

An advantage of this is that duplication of secure keys of consumer electronics devices can be detected without sharing the secure keys themselves, thus preventing any risk of compromising the secure keys. The consumer electronics device having a duplicated secure key can be identified by the device identifier linked with the hash value of the duplicated key. That device can then be loaded with a new secure key if needed to remove the duplication of the secure key across devices.

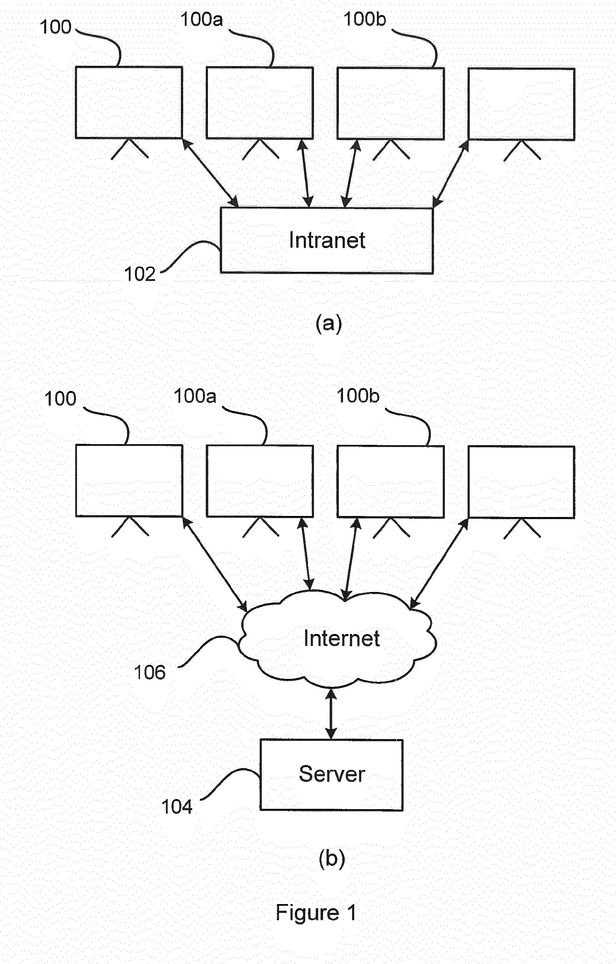

Figure 1 illustrates two example methods for detecting duplication of secure keys of consumer electronics devices 100.

The consumer electronics device 100 may be for example a media device such as a television set, a display screen or panel, a set top box, a PVR (personal video recorder, also known as a DVR or digital video recorder), a DVD player, a Blu Ray player, a personal computing device such as a laptop or desktop or tablet computer, a video game console, a cellular phone (including a so-called "smart phone"), a media player, etc.

In Figure 1a, at least one consumer electronics device 100 comprises the detection function. That is, the determining whether or not a secure key of a first consumer electronics device 100a is a duplicate is carried out by one or more consumer electronics devices, e.g. the first and/or second consumer electronics devices 100a, 100b. As shown in Figure 1a, each consumer electronics device 100 transmits their device identifier and linked hash value of their secure key to a detection function implemented on one or more of the consumer electronics devices. For example, each consumer electronics device 100 may be connected to a network 102. The network 102 may be, for example, a local area network, such as an intranet, and/or a wide area network, such as the Internet. The connections may be wired and/or wireless.

Each consumer electronics device 100 may transmit (e.g. broadcast or multicast) their data pair to one or more other consumer electronics devices 100 (i.e. consumer electronics devices 100 having a device identifier other than the device identifier of the broadcasting or multicasting device). Similarly, each consumer electrics device 100 may receive data pairs from one or more other consumer electronics devices 100. This enables the one or more other consumer electronics devices 100 to determine whether or not the secure key of the at least one consumer electronics device 100 is a duplicate of a secure key of the one or more other consumer electronics devices.

In Figure 1b, the detection function is implemented on a remote server 104 comprising one or more server units at one or more geographic sites (not shown). Each consumer electronics device 100 may transmit their data pair (i.e. the hash value of their secure key and their device identifier) to the server 104 via a wired and/or wireless connection 106, e.g. over the internet. The remote server 104 receives two or more data pairs from different consumer electronics devices 100 and compares the hash values contained in the received data pairs to determine if a secure key has been duplicated. An advantage of this is that the duplication of secure keys may be detected when the consumer electronics devices 100 are "in the field", that is, after the consumer electronics device 100 have been, for example, bought by a consumer.

In either example, each consumer electronics device 100 may generate the hash value of its own secure key. That is, the consumer electronics device 100 may have a hash function configured to generate the hash value of the secure key of the consumer electronics device. All of the consumer electronics devices 100 have the same hash function. That is, all of the consumer electronics devices 100 carry out the same hashing process such that if two or more consumer electronics devices 100 have the same secure key, then they will generate the same hash value. Each consumer electronics device 100 may then transmit, to the detection function, the generated hash value and the linked device identifier of that device (i.e. a data pair).

When the detection function is implemented by at least one consumer electronics device, transmitting to the detection function comprises transmitting the data pair to a detection function carried out by the same consumer electronics device 100 and/or to a detection function carried out by a different consumer electronics device. That is, a first consumer electronics device 100a may generate the hash value of its own secure key and compare the generated hash value with a second hash value received from a different consumer electronics device 100. Additionally or alternatively, a first consumer electronics device 100a may generate the hash value of its own secure key and transmit it, along with the linked device identifier of the first consumer electronics device 100a, to a second consumer electronics device 100b, which performs the comparison.

When the detection function is implemented by a server 104, transmitting to the detection function comprises transmitting the generated hash value and linked identifier to the server 104. Again, all of the consumer electronics devices 100 have the same hash function. That is, all of the consumer electronics devices 100 carry out the same hashing process such that if two or more consumer electronics devices 100 have the same secure key, then they will generate the same hash value.

The consumer electronics device 100 may transmit the data pair via a wired or wireless connection. For example, the consumer electronics device 100 may have a transceiver for communicating via any suitable medium. For example, the transceiver may be a wireless transceiver, e.g. a radio transceiver for communicating via a cellular radio channel (though other forms are not excluded, e.g. an infrared transceiver). The transceiver may comprise a Wi-Fi, Bluetooth, etc. interface for enabling the consumer electronics device 100 to communicate wirelessly directly with a different consumer electronics device. Additionally or alternatively, the wireless transceiver 206 may communicate with another consumer electronics device 100 via a wireless router or a server, for example, over a local area network such as a WLAN or a wide area network such as the internet. The transceiver may instead be a wired transceiver for communicating with one or more other consumer electronics devices 100 and/or the remote server 104 via a wired network such as an Ethernet network, DALI network or other wired local or wide area network.

This provides a fast and reliable way of detecting duplication of secure keys of consumer electronics devices without compromising the integrity of the secure keys themselves.

In some examples, a consumer electronics device 100 may generate a visual representation of a hash value. A consumer electronics device 100 may generate a visual representation of its own generated hash value and/or of one or more hash values received from one or more other consumer electronics devices.

The consumer electronics device 100 generates visual representations of hash values such that identical hash values result in identical visual representations. That is, if the hash value of the secure keys of the first and second consumer electronics devices 100a, 100b are identical, the visual representations of those hash values will be identical.

The consumer electronics device 100 may have a display screen configured to display one or more of the generated visual representations of the hash values. For example, the consumer electronics device 100 may display the visual representation of the hash value of its own secure key. Additionally or alternatively, the consumer electronics device 100 may display the visual representation of the hash value of one or more other consumer electronics devices.

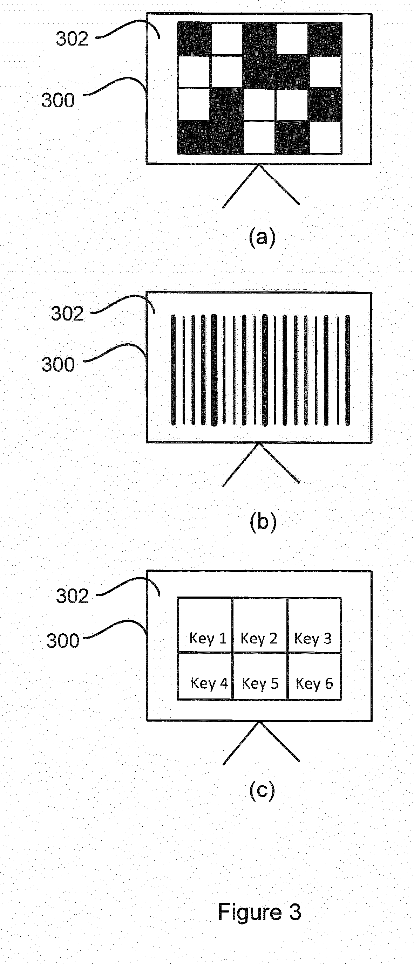

As shown in Figure 3a and 3b, the visual representation of a hash value may be a numerical pattern such as, for example, a square code or a (one or two-dimensional) barcode. Figure 3c illustrates an example of multiple visual representations shown on a display screen 302 of a single consumer electronics device 300. A visual representation of a hash value may be a colour representation such as, for example, an RGB (red, green, and blue) or ARGB (alpha, red, green, and blue) colour value. In the example of Figure 3c, the consumer electronics device 300 receives six hash values of six secure keys, one of which may have been generated by that consumer electronics device 300. The consumer electronics device 300 generates a visual representation of each hash value. For example, the display screen 302 is divided into six areas or regions, with each region being coloured according to an ARGB colour value. Alternatively, each region may show or otherwise represent a generated numerical pattern. A secure key has been duplicated if two or more of the visual representations are identical.

As an optional feature, the visual representations of two or more hash values can be compared to determine if a secure key has been duplicated. That is, the visual representation of the hash value of the secure key of a first consumer electronics device 100a may be compared with the visual representation of the hash value of the secure key of the second consumer electronics device 100b. If the two visual representations are identical, the secure key of the first consumer electronics device 100a is a duplicate. An advantage of generating visual representations is that they can be easily compared using visual capture systems (e.g. cameras) and/or by humans, depending on the type of visual representation. For example, a user of a consumer electronics device 100 may easily compare two colours to check if they match.

If a secure key has been duplicated, e.g. the secure key of the first consumer electronics device 100a is a duplicate, the consumer electronics device 100 may output an alert to a user of the consumer electronics device. An alert function may output the alert as a visual and/or audio alert. For example, the alert may be a message displayed on a display screen of the consumer electronics device. As another example, the alert may be a warning sound or message played out by a speaker of the consumer electronics device. The alert may be generated by the consumer electronics device 100 itself. Additionally or alternatively, the alert may be generated by a different consumer electronics device and/or the remote server 104, depending on where the detection function is implemented. In these examples, a notification indicating that the secure key of the first consumer electronics device 100a is a duplicate is transmitted to and received by the consumer electronics device 100 which then outputs an alert. A record of the duplication may also be kept, for example by the consumer electronics device 100 and/or at some server or database.

As an example use case, during production and/or testing of consumer electronics devices, e.g. television sets, a plurality of consumer electronics devices 100 are powered on and connected to an intranet network. Each consumer electronics device 100 processes its secure key to generate a hash value of its secure key. Each consumer electronics device 100 broadcasts or multicasts their hash value and their linked device identifier to the other consumer electronics devices 100 via the intranet. All of the consumer electronics devices 100 listen out for hash values broadcast or multicast by other consumer electronics devices. If any consumer electronics device 100 receives a hash value linked with a device identifier other than its own device identifier and that is the same as its own generated hash value, that consumer electronics device 100 outputs an alert, e.g. as a message or sound. This therefore provides a self-checking mechanism for detecting duplication of secure keys as part of a quality control process before the consumer electronics devices 100 are shipped to customers, end-users, etc.

As another example use case, if the consumer electronics devices 100 are in the field, e.g. in homes of consumers, duplication of secure keys is detected by a remote server 104. A plurality of consumer electronics devices 100 in the field send their generated hash values and linked device identifiers to the server 104, e.g. via the internet. The server 104 then compares the received hash values to identify duplicated keys. If any keys are duplicated, the server 104 may transmit a notification to a consumer electronics device 100 (e.g. one having a duplicated key) and/or to the manufacturer of the consumer electronics devices. This therefore provides a mechanism to check for duplication of keys after shipping or sale of the consumer electronics devices.

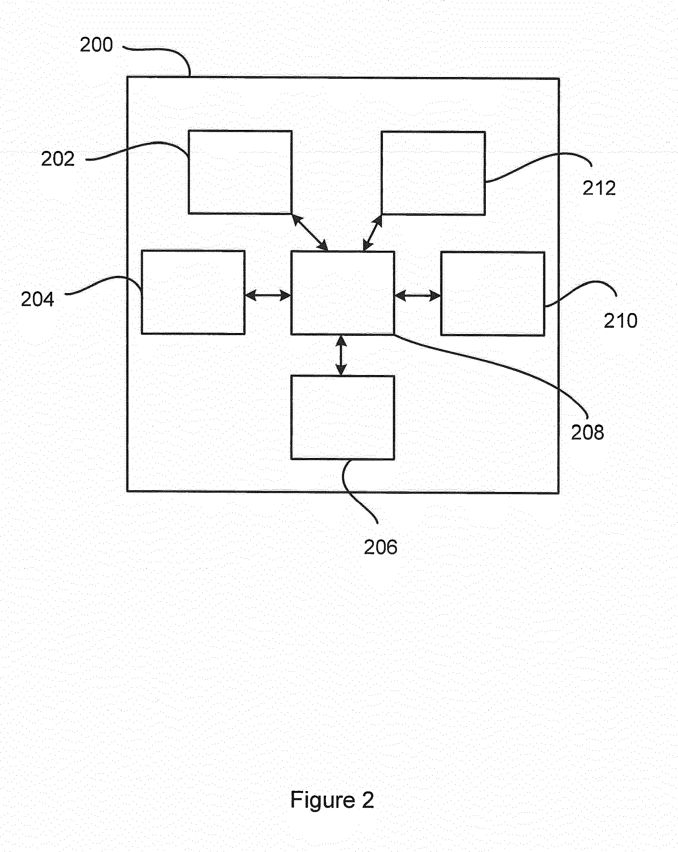

Figure 2 illustrates schematically an example consumer electronics device 200. The consumer electronics device 200 has a detection function 202 configured to receive two or more data pairs and determine whether or not a secure key of a first consumer electronics device 100a is a duplicate of a secure key of a second consumer electronics device 100b by comparing the hash value of the secure key of the first consumer electronics device 100a with the hash value of the secure key of the second consumer electronics device 100b. The consumer electronics device 200 may also have a hash function 204 operatively coupled to the detection function 202 and configured to generate the hash value of the secure key of the consumer electronics device 200. The consumer electronics device 200 may also have an alert function 206 operatively coupled to the detection function 202 and configured to generate and output an alert to the user of the consumer electronics device 200. One or more of the detection function 202, hash function 204 and alert function 206 may be functional components of the consumer electronics device 200, i.e. they represent functions that are carried out according to computer-readable instructions (software) executed on one or more processors of the consumer electronics device 100 (such as CPUs, GPUs etc.).

The consumer electronics device 200 may also have a controller 208, such as a processor, configured to generate one or more respective visual representations for one or more received hash values. The controller 208 may be operatively coupled to one or more of the detection function 202, the hash function 204, the alert function 206, a display screen 210, a speaker (not shown), and a transceiver 212.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of detecting duplication of secure keys of consumer electronics devices (100) during production and/or testing of the consumer electronics devices (100), the method comprising:
each consumer electronics device (100) processing its secure key to generate a hash value of its secure key;
each consumer electronics device (100) transmitting a data pair comprising its hash value and a linked device identifier of the consumer electronics device (100) to the other consumer electronics devices (100);
each consumer electronics device (100) receiving data pairs from the other consumer electronics devices (100), wherein each data pair comprises a hash value of a secure key of a respective consumer electronics device (100) and a linked device identifier of that consumer electronics device (100);
each consumer electronics device (100) determining whether or not a secure key of the consumer electronics device (100a) is a duplicate of a secure key of another consumer electronics devices (100b) by comparing the hash value of its secure key with the hash value of the secure key of the other consumer electronics devices (100b); and
if any consumer electronics device (100) receives a hash value linked with a device identifier other than its own device identifier and that is the same as its own generated hash value, that consumer electronics device (100) outputting an alert.

2. A method according to claim 1, comprising:
at least one consumer electronics device (100) generating a respective visual representation for one or more received hash values, wherein said generating comprises generating identical visual representations for identical hash values; and
at least one consumer electronics device (100) displaying one or more of the generated visual representations on a display screen of the at least one consumer electronics device (100).

3. A method according to claim 2, wherein the comparing comprises comparing the visual representation of the hash value of the secure key of the first consumer electronics device (100a) with the visual representation of the hash value of the secure key of the second consumer electronics device (100b).

4. Apparatus for detecting duplication of secure keys of consumer electronics devices (100) during production and/or testing of the consumer electronics devices (100), wherein the apparatus is a first one of the consumer electronics devices (100), the apparatus comprising:
a hash function (204) configured to generate a hash value of the secure key of the first consumer electronics device (100), wherein the apparatus is configured to transmit its hash value and a linked device identifier of the first consumer electronics device (100) to the other consumer electronics devices (100);
a detection function (202) for receiving data pairs, wherein each data pair is received from a respective one of the other consumer electronics devices (100), and wherein each data pair comprises a hash value of a secure key of a respective consumer electronics device (100) and a linked device identifier of that consumer electronics device (100);
the detection function (202) being arranged to determine whether or not a secure key of the first consumer electronics device (100a) is a duplicate of a secure key of another of the consumer electronics devices (100b) by comparing the hash value of its secure key with the hash value of the secure key of the other consumer electronics devices (100b); and
an alert function (206) configured to output an alert in response to determining that the secure key of the first consumer electronics device (100a) is a duplicate of the secure key of another of the consumer electronics devices (100b).

5. Apparatus according to claim 4, wherein the apparatus comprises a display screen (302) for outputting the alert visually.

6. A computer program comprising instructions such that when the computer program is executed on a consumer electronics device (100), the consumer electronics device (100) carries out a method during production and/or testing of the consumer electronics device (100) and other consumer electronic devices (100) comprising:
processing a secure key of the consumer electronics device (100) to generate a hash value of its secure key;
transmitting a data pair comprising its hash value and a linked device identifier of the consumer electronics device (100) to the other consumer electronics devices (100);
receiving data pairs from the other consumer electronics devices (100), wherein each data pair comprises a hash value of a secure key of a respective consumer electronics device (100) and a linked device identifier of that consumer electronics device (100);
determining whether or not a secure key of the consumer electronics device (100a) is a duplicate of a secure key of another consumer electronics devices (100b) by comparing the hash value of its secure key with the hash value of the secure key of the other consumer electronics devices (100b); and
if the consumer electronics device (100) receives a hash value linked with a device identifier other than its own device identifier and that is the same as its own generated hash value, the consumer electronics device (100) outputting an alert.

## Patentansprüche

1. Verfahren zum Erkennen einer Duplizierung von sicheren Schlüsseln von Verbraucherelektronikgeräten (100) während Herstellung und/oder Testen der Verbraucherelektronikgeräte (100), wobei das Verfahren aufweist:
von jedem Verbraucherelektronikgerät (100) Verarbeiten seines sicheren Schlüssels, um einen Hash-Wert seines sicheren Schlüssels zu erzeugen;
von jedem Verbraucherelektronikgerät (100) Senden eines Datenpaares mit seinem Hash-Wert und einer verknüpften Gerätekennung des Verbraucherelektronikgeräts (100) an die anderen Verbraucherelektronikgeräte (100);
von jedem Verbraucherelektronikgerät (100) Empfangen von Datenpaaren von den anderen Verbraucherelektronikgeräten (100), wobei jedes Datenpaar einen Hash-Wert eines sicheren Schlüssels eines jeweiligen Verbraucherelektronikgeräts (100) und eine verknüpfte Gerätekennung dieses Verbraucherelektronikgeräts (100) aufweist;
von jedem Verbraucherelektronikgerät (100) Ermitteln, ob ein sicherer Schlüssel des Verbraucherelektronikgeräts (100a) ein Duplikat eines sicheren Schlüssels eines anderen der Verbraucherelektronikgeräte (100b) ist oder nicht, durch Vergleichen des Hash-Werts seines sicheren Schlüssels mit dem Hash-Wert des sicheren Schlüssels der anderen Verbraucherelektronikgeräte (100b); und
falls irgendein Verbraucherelektronikgerät (100) einen Hash-Wert empfängt, der mit einer Gerätekennung anders als seine eigene Gerätekennung verknüpft ist und der derselbe wie sein eigener erzeugter Hash-Wert ist, von diesem Verbraucherelektronikgerät (100) Ausgeben eines Alarms.

2. Verfahren nach Anspruch 1, aufweisend:
von wenigstens einem Verbraucherelektronikgerät (100) Erzeugen einer jeweiligen visuellen Darstellung für ein oder mehr empfangene Hash-Werte, wobei das Erzeugen ein Erzeugen identischer visueller Darstellungen für identische Hash-Werte aufweist; und
von wenigstens einem Verbraucherelektronikgerät (100) Anzeigen von ein oder mehr der erzeugten visuellen Darstellungen auf einem Bildschirm des wenigstens einen Verbraucherelektronikgeräts (100).

3. Verfahren nach Anspruch 2, bei welchem das Vergleichen ein Vergleichen der visuellen Darstellung des Hash-Werts des sicheren Schlüssels des ersten Verbraucherelektronikgeräts (100a) mit der visuellen Darstellung des Hash-Werts des sicheren Schlüssels des zweiten Verbraucherelektronikgeräts (100b) aufweist.

4. Vorrichtung zum Erkennen einer Duplizierung von sicheren Schlüsseln von Verbraucherelektronikgeräten (100) während Herstellung und/oder Testen der Verbraucherelektronikgeräte (100), wobei die Vorrichtung eine erste der Verbraucherelektronikgeräte (100) ist, wobei die Vorrichtung aufweist:
eine Hash-Funktion (204), die konfiguriert ist, um einen Hash-Wert des sicheren Schlüssels des ersten Verbraucherelektronikgeräts (100) zu erzeugen, wobei die Vorrichtung konfiguriert ist, um ihren Hash-Wert und eine verknüpfte Gerätekennung des ersten Verbraucherelektronikgeräts (100) an die anderen Verbraucherelektronikgeräte (100) zu senden;
eine Erfassungsfunktion (202) zum Empfangen von Datenpaaren, wobei jedes Datenpaar von einem jeweiligen der anderen Verbraucherelektronikgeräte (100) empfangen wird, und wobei jedes Datenpaar einen Hash-Wert eines sicheren Schlüssels eines jeweiligen Verbraucherelektronikgeräts (100) und eine verknüpfte Gerätekennung dieses Verbraucherelektronikgeräts (100) aufweist;
wobei die Erfassungsfunktion (202) eingerichtet ist, um zu ermitteln, ob ein sicherer Schlüssel des ersten Verbraucherelektronikgeräts (100a) ein Duplikat eines sicheren Schlüssels eines anderen der Verbraucherelektronikgeräte (100b) ist oder nicht, durch Vergleichen des Hash-Werts seines sicheren Schlüssels mit dem Hash-Wert des sicheren Schlüssels der anderen Verbraucherelektronikgeräte (100b); und
eine Alarmfunktion (206), die konfiguriert ist, um als Reaktion auf ein Ermitteln, dass der sichere Schlüssel des ersten Verbraucherelektronikgeräts (100a) ein Duplikat des sicheren Schlüssels eines anderen der Verbraucherelektronikgeräte (100b) ist, einen Alarm auszugeben.

5. Vorrichtung nach Anspruch 4, wobei die Vorrichtung einen Bildschirm (302) zum visuellen Ausgeben des Alarms aufweist.

6. Computerprogramm, aufweisend Anweisungen derart, dass, wenn das Computerprogramm auf einem Verbraucherelektronikgerät (100) ausgeführt wird, das Verbraucherelektronikgerät (100) während Herstellung und/oder Testen des Verbraucherelektronikgeräts (100) und anderer Verbraucherelektronikgeräte (100) ein Verfahren ausführt, das aufweist:
Verarbeiten seines sicheren Schlüssels des Verbraucherelektronikgeräts (100), um einen Hash-Wert seines sicheren Schlüssels zu erzeugen;
Senden eines Datenpaares mit seinem Hash-Wert und einer verknüpften Gerätekennung des Verbraucherelektronikgeräts (100) an die anderen Verbraucherelektronikgeräte (100);
Empfangen von Datenpaaren von den anderen Verbraucherelektronikgeräten (100), wobei jedes Datenpaar einen Hash-Wert eines sicheren Schlüssels eines jeweiligen Verbraucherelektronikgeräts (100) und eine verknüpfte Gerätekennung dieses Verbraucherelektronikgeräts (100) aufweist;
Ermitteln, ob ein sicherer Schlüssel des Verbraucherelektronikgeräts (100a) ein Duplikat eines sicheren Schlüssels eines anderen der Verbraucherelektronikgeräte (100b) ist oder nicht, durch Vergleichen des Hash-Werts seines sicheren Schlüssels mit dem Hash-Wert des sicheren Schlüssels der anderen Verbraucherelektronikgeräte (100b); und
falls das Verbraucherelektronikgerät (100) einen Hash-Wert empfängt, der mit einer Gerätekennung anders als seine eigene Gerätekennung verknüpft ist und der derselbe wie sein eigener erzeugter Hash-Wert ist, von diesem Verbraucherelektronikgerät (100) Ausgeben eines Alarms.

## Revendications

1. Procédé de détection de la duplication de clés sécurisées de dispositifs électroniques grand public (100) lors de la production et / ou du test des dispositifs électroniques grand public (100), le procédé comprenant :
chaque dispositif électronique grand public (100) traitant sa clé sécurisée pour générer une valeur de hachage de sa clé sécurisée ;
chaque dispositif électronique grand public (100) transmettant une paire de données comprenant sa valeur de hachage et un identifiant de dispositif lié du dispositif électronique grand public (100), aux autres dispositifs électroniques grand public (100) ;
chaque dispositif électronique grand public (100) recevant des paires de données des autres dispositifs électroniques grand public (100), dans lequel chaque paire de données comprend une valeur de hachage d'une clé sécurisée d'un dispositif électronique grand public respectif (100) et un identifiant de dispositif lié de ce dispositif électronique grand public (100) ; et
chaque dispositif électronique grand public (100) déterminant si oui ou non une clé sécurisée du dispositif électronique grand public (100a) est un double d'une clé sécurisée d'un autre dispositif électronique grand public (100b), en comparant la valeur de hachage de sa clé sécurisée avec la valeur de hachage de la clé sécurisée de l'autre dispositif électronique grand public (100b) ; et
si un quelconque dispositif électronique grand public (100) reçoit une valeur de hachage qui est liée à un identifiant de dispositif autre que son propre identifiant de dispositif et qui est la même que sa propre valeur de hachage générée, ce dispositif électronique grand public (100) délivrant une alerte.

2. Procédé selon la revendication 1, comprenant :
au moins un dispositif électronique grand public (100) générant une représentation visuelle respective pour une ou plusieurs valeurs de hachage reçues, dans lequel ladite génération consiste à générer des représentations visuelles identiques pour des valeurs de hachage identiques ; et
au moins un dispositif électronique grand public (100) affichant une ou plusieurs des représentations visuelles générées sur un écran d'affichage dudit au moins un dispositif électronique grand public (100).

3. Procédé selon la revendication 2, dans lequel la comparaison consiste à comparer la représentation visuelle de la valeur de hachage de la clé sécurisée du premier dispositif électronique grand public (100a) avec la représentation visuelle de la valeur de hachage de la clé sécurisée du deuxième dispositif électronique grand public (100b).

4. Appareil pour détecter la duplication de clés sécurisées de dispositifs électroniques grand public (100) lors de la production et / ou du test des dispositifs électroniques grand public (100), dans lequel l'appareil est un premier dispositif électronique grand public parmi les dispositifs électroniques grand public (100), l'appareil comprenant :
une fonction de hachage (204) qui est configurée pour générer une valeur de hachage de la clé sécurisée du premier dispositif électronique grand public (100), dans lequel l'appareil est configuré pour transmettre sa valeur de hachage et un identifiant de dispositif lié du premier dispositif électronique grand public (100) aux autres dispositifs électroniques grand public (100) ;
une fonction de détection (202) qui est destinée à recevoir des paires de données, dans lequel chaque paire de données est reçue de la part d'un dispositif électronique grand public respectif parmi les autres dispositifs électroniques grand public (100), et dans lequel chaque paire de données comprend une valeur de hachage d'une clé sécurisée d'un dispositif électronique grand public respectif (100) et un identifiant de dispositif lié de ce dispositif électronique grand public (100) ;
la fonction de détection (202) étant agencée pour déterminer si oui ou non une clé sécurisée du premier dispositif électronique grand public (100a) est un double d'une clé sécurisée d'un autre des dispositifs électroniques grand public (100b), en comparant la valeur de hachage de sa clé sécurisée avec la valeur de hachage de la clé sécurisée de l'autre dispositif électronique grand public (100b) ; et
une fonction d'alerte (206) qui est configurée pour délivrer une alerte en réponse à la détermination que la clé sécurisée du premier dispositif électronique grand public (100a) est un double de la clé sécurisée d'un autre des dispositifs électroniques grand public (100b).

5. Appareil selon la revendication 4, dans lequel l'appareil comprend un écran d'affichage (302) servant à délivrer l'alerte visuellement.

6. Programme informatique comprenant des instructions telles que, lorsque le programme informatique est exécuté sur un dispositif électronique grand public (100), le dispositif électronique grand public (100) réalise un procédé lors de la production et / ou du test du dispositif électronique grand public (100) et d'autres dispositifs électroniques grand public (100), le procédé consistant à :
traiter une clé sécurisée du dispositif électronique grand public (100) pour générer une valeur de hachage de sa clé sécurisée ;
transmettre une paire de données comprenant sa valeur de hachage et un identifiant de dispositif lié du dispositif électronique grand public (100), aux autres dispositifs électroniques grand public (100) ;
recevoir des paires de données de la part des autres dispositifs électroniques grand public (100), dans lequel chaque paire de données comprend une valeur de hachage d'une clé sécurisée d'un dispositif électronique grand public respectif (100) et un identifiant de dispositif lié de ce dispositif électronique grand public (100) ;
déterminer si oui ou non une clé sécurisée du dispositif électronique grand public (100a) est un double d'une clé sécurisée d'un autre dispositif électronique grand public (100b), en comparant la valeur de hachage de sa clé sécurisée avec la valeur de hachage de la clé sécurisée de l'autre dispositif électronique grand public (100b) ; et
si le dispositif électronique grand public (100) reçoit une valeur de hachage qui est liée à un identifiant de dispositif autre que son propre identifiant de dispositif et qui est la même que sa propre valeur de hachage générée, délivrer une alerte par le dispositif électronique grand public (100).
